# EUROPEAN PATENT SPECIFICATION

(11) **EP 3 955 098 B1**
(45) Date of publication and mention of the grant of the patent: **05.06.2024**
(21) Application number: 20900754.1
(22) Date of filing: 16.10.2020
(51) Int. Cl.: G06F 3/16, G06F 3/0481, G06F 9/451

(54) **SPEECH INTERACTION INFORMATION CONSTRUCTION METHOD, VEHICLE, AND STORAGE MEDIUM**
KONSTRUKTIONSVERFAHREN FÜR SPRACHINTERAKTIONSINFORMATIONEN, FAHRZEUG UND SPEICHERMEDIUM
PROCÉDÉ DE CONSTRUCTION D'INFORMATIONS D'INTERACTION VOCALE, VÉHICULE ET SUPPORT DE STOCKAGE

(30) Priority: 28.06.2020 CN 202010599634
(43) Date of publication of application: 16.02.2022
(73) Proprietor: Guangdong Xiaopeng Motors Technology Co., Ltd., Sino-Singapore Knowledge City, Huangpu District Guangzhou, Guangdong 510555 (CN)
(72) Inventor: YI, Hui, Guangzhou, Guangdong 510555 (CN); BAO, Pengli, Guangzhou, Guangdong 510555 (CN); SUN, Fangxun, Guangzhou, Guangdong 510555 (CN); WENG, Zhiwei, Guangzhou, Guangdong 510555 (CN); MA, Hongbo, Guangzhou, Guangdong 510555 (CN)
(74) Representative: DREISS Patentanwälte PartG mbB
(86) International application number: PCT/CN2020/121559
(87) International publication number: WO 2022/000863

(56) References cited:
- EP-A1- 3 474 513
- CN-A- 105 513 594
- CN-A- 105 513 594
- CN-A- 110 211 586
- CN-A- 110 610 701
- CN-A- 111 722 826
- US-A1- 2018 336 006

## Description

### BACKGROUND

With the development of artificial intelligence technology, a voice intelligence platform or voice assistant, because of the capability of recognizing a user's voice input and generating corresponding operating instructions under certain conditions, provides significant convenience for the user to operate the vehicle equipment, such as the central control display of the vehicle, and thus is widely used. In the related art, however, the voice assistant has strict requirements on the user's voice input corresponding to the recognizable voice instruction, and has relatively poor intelligence. In US 2018/336006 A1 actions are associated with nodes (controls) in the GUI, and are used to cause a transition to a subsequent node that comes into focus if a given action is taken. Thus the action is used to navigate to a subsequent node.

### SUMMARY

In view of this, the embodiments of the present disclosure provide a method of constructing voice interaction information, a vehicle, and a computer-readable storage medium as set out in the appended claims.

### BRIEF DESCRIPTION OF DRAWINGS

The above and/or additional aspects and advantages of the present disclosure will become apparent and easy to understand from the following description of the embodiments in conjunction with the accompanying drawings, in which:
FIG. 1 is a schematic flowchart of a method of constructing voice interaction information according to some embodiments of the present disclosure.
FIG. 2 is a schematic diagram of modules of a vehicle according to some embodiments of the present disclosure.
FIG. 3 is a schematic flowchart of a construction method according to some embodiments of the present disclosure.
FIG. 4 is a schematic flowchart of a construction method according to some embodiments of the present disclosure.
FIG. 5 is a schematic structural diagram of a voice interaction element according to some embodiments of the present disclosure.
FIG. 6 is a schematic diagram of a mapping relationship between voice interaction elements and controls in a graphical user interface according to some embodiments of the present disclosure.
FIG. 7 is a schematic diagram of a mapping relationship between a voice interaction element and a control of a graphical user interface according to some embodiments of the present disclosure.
FIG. 8 is a schematic flowchart of a construction method according to some embodiments of the present disclosure.
FIG. 9 is a schematic diagram of a mapping relationship between voice interaction elements and controls in a graphical user interface according to some embodiments of the present disclosure.
FIG. 10 is a schematic diagram of a directed graph of voice interaction elements according to some embodiments of the present disclosure.
FIG. 11 is a schematic diagram of a graphical user interface and a voice interaction scene stack according to some embodiments of the present disclosure.

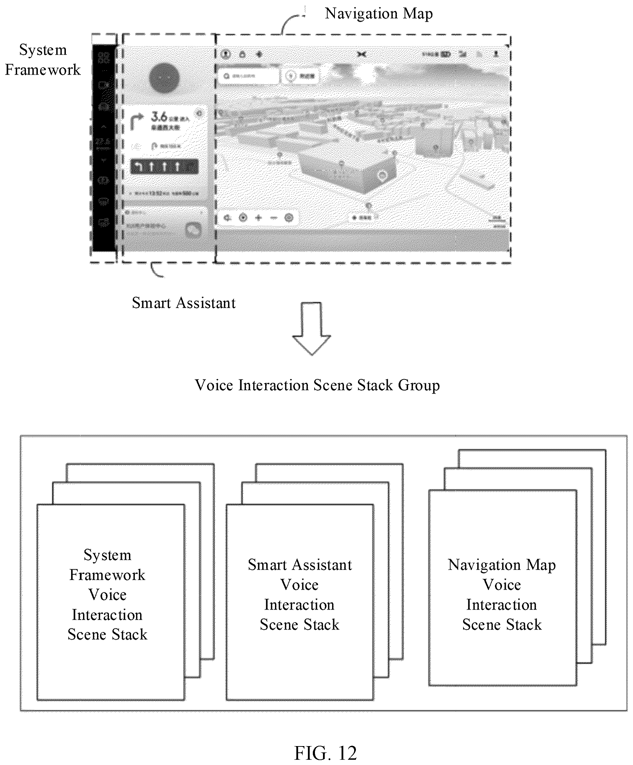

FIG. 12 is a schematic diagram of a graphical user interface and a voice interaction scene stack group according to some embodiments of the present disclosure.

### DESCRIPTION OF EMBODIMENTS

The embodiments of the present disclosure are described in detail below. Examples of the embodiments are shown in the accompanying drawings, where the same or similar reference numbers indicate the same or similar elements or elements with the same or similar functions throughout the context. The embodiments described below with reference to the drawings are exemplary, and are intended to explain the present disclosure, but should not be understood as limitations to the present disclosure.

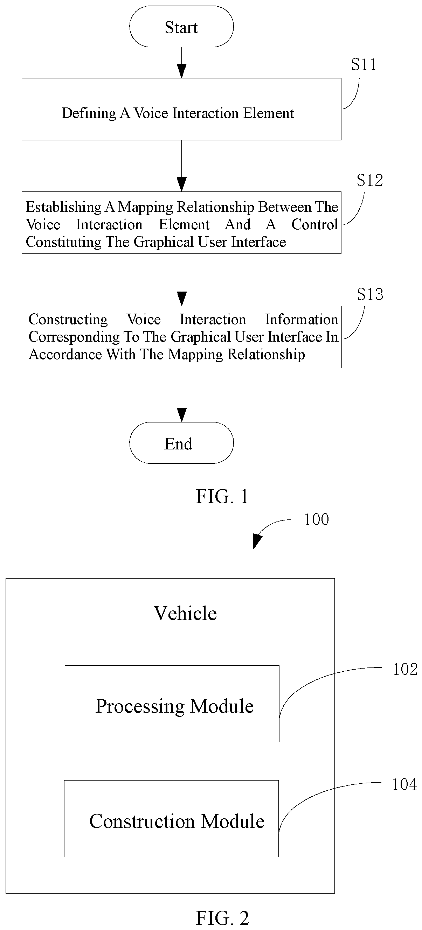

With reference to FIG. 1, the present disclosure provides a voice control method of a vehicle, which includes:
S11 of defining a voice interaction element;
S12 of establishing a mapping relationship between the voice interaction element and a control constituting a graphical user interface; and
S13 of constructing voice interaction information corresponding to the graphical user interface in accordance with the mapping relationship.

An embodiment of the present disclosure provides a vehicle. The vehicle includes a display area and a processor. The display area of the vehicle may include an instrument board, an on-board display area screen, and a head-up display that can be realized on a windshield of the vehicle, etc. On-board systems running on the vehicle use a graphical user interface (GUI) to present the displayed content to the user. The display area includes a variety of UI elements, and different display areas may display the same or different UI elements. The UI elements may include card objects, application icons or interfaces, folder icons, multimedia file icons, and operable controls for interaction, etc. The processor is configured to define the voice interaction element, to establish the mapping relationship between the voice interaction element and the control constituting the graphical user interface, and to construct the voice interaction information corresponding to the graphical user interface in accordance with the mapping relationship.

Referring to FIG. 2, an embodiment of the present disclosure further provides a vehicle 100, and the voice control method of the embodiment of the present disclosure may be implemented by the vehicle 100 of this embodiment of the present disclosure.

Specifically, the vehicle 100 includes a processing module 102 and a construction module 104. S11 may be implemented by the processing module 102, and S12 and S 13 may be implemented by the construction module 104. In other words, the processing module 102 is configured to define a voice interaction element. The construction module 104 is configured to establish a mapping relationship between the voice interaction element and a control constituting the graphical user interface, and to construct voice interaction information corresponding to the graphical user interface in accordance with the mapping relationship.

In the method of constructing voice interactive information and the vehicle 100 of the embodiments of the present disclosure, the graphical user interface and the voice interaction information are made consistent by defining the voice interaction element that forms a mapping relationship with the control in the graphical user interface, and display elements in the graphical user interface that can be operated by touching can all be operated by voice access, providing users with a more convenient way of interaction, and achieving better intelligence and user experience of voice interaction.

Specifically, the intelligent display area of the vehicle may provide the user with a convenient entrance to control the vehicle and interact with the vehicle. The addition of a voice assistant to an on-board operating system can conveniently generate corresponding control instructions by recognizing the voice under certain conditions, which provides further convenience for the user's interaction with the vehicle. However, the voice interaction that the voice assistant can perform is limited, usually allowing only interaction with the preset operation targets; while in the case of a non-preset operation target, the real purpose of the user cannot be understood, and the user can interact with the operation target only by inputting the operation target in the graphical user interface, but cannot interact through voice. For a situation where the user is in a driving mode currently, there is a certain safety risk if the user interacts through the graphical user interface while driving.

In this embodiment, the voice interaction element is defined to correspond to the control in the graphical user interface, so as to construct the voice interaction information describing the graphical user interface. The voice interaction information is composed of the voice interaction element, where the voice interaction element can perform voice operations, that is, the user may interact with the target control in the graphical user interface by voice access.

The definition of the voice interaction element may be made by referring to the information of the control in the graphical user interface to set the information of the voice interaction element, such as an element ID, an element type, an element supportable operation, and other information, so that the voice interaction element may uniquely correspond to the control. Further, the voice instruction can locate the target control contained in the instruction by the settings in terms of the voice interaction.

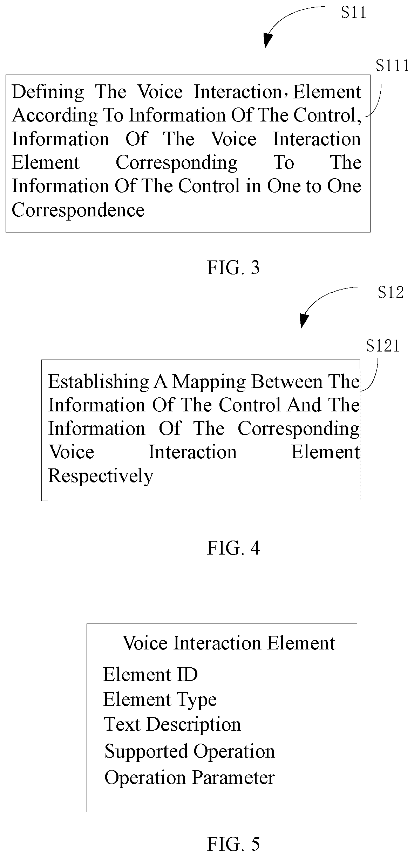

With reference to FIG. 3, in some embodiments, S11 includes:
S111 of defining the voice interaction element according to information of the control, information constituting the voice interaction element corresponding to the information of the control in one to one correspondence.

In some embodiments, S111 may be implemented by the processing module 102, that is, the processing module 102 is configured to construct the voice interaction element according to attribute information of the control.

In some embodiments, the processor is configured to construct the voice interaction element according to the attribute information of the control.

Specifically, the information of the control of the graphical user interface includes a control ID, a control type, a text description, a control supportable operation mode, an operation parameter, positions and a layout relationship of a plurality of controls in the interface, etc.

The control ID may be used to identify each control in the current graphical user interface, and each control has a unique ID. The content presented in the current graphical user interface is composed of controls. Taking an information point card interface as an example, the controls in the interface include an information point name, an address, favorites, exploring nearby, route navigation, and so on.

The text description is expression of the control in the graphical user interface. For example, for a favorites control, the text description is "favorites".

The control type is also a control presentation type of the control in the graphical user interface, such as text, button, single choice, check box, slider, tab, list, etc.

The control supportable operation mode is an operation that can be performed by a corresponding type of control. For example, the text does not support related operations, the operation supported by the button is clicking, the operation supported by the single choice is on/off, the operation supported by the check box is clicking, the operation supported by the slider is assigning, the operation supported by the tab is selecting, and the operation supported by the list is scrolling, etc.

The operation parameter corresponds to the degree of the operation mode. For example, the operation parameter corresponding to "clicking" is short press or long press, and the operation parameter corresponding to the slider is large, medium, small, etc.

The positions and the layout relationship of a plurality of controls in the interface reflect the distribution and layout of the related controls in the same graphical user interface.

In order to associate the voice interaction element with the control, the voice interaction element should also include information of the voice interaction element corresponding to the information of the control, with the content of the information of the voice interaction element corresponding to the information of the associated control in one to one correspondence.

For example, the information of the voice interaction element includes an element ID, an element type, a text description, an element supportable operation mode, an operation parameter, positions and a layout relationship of a plurality of elements in the interface, etc.

In this way, the mapping between the voice interaction element and the control is achieved by enabling the information of the voice interaction element to correspond to the information of the control in one to one correspondence, so that in the voice interaction, a voice interaction element obtained by semantic analysis can locate a control associated with the voice interaction element, thereby realizing the voice operation on the control in the graphical user interface.

With reference to FIG. 4, in some embodiments, the information of the control includes a control ID, a control attribute, and a control supportable event, and the information of the voice interaction element includes an element ID, an element attribute, and an element supportable operation. S 12 includes:
S121 of establishing a mapping between the information of the control and the information of the corresponding voice interaction element respectively.

In some embodiments, S 121 may be implemented by the construction module 104, or in other words, the construction module 104 is configured to respectively establish a mapping between the information of the control and the information of the corresponding voice interaction element.

In some embodiments, the processor is configured to respectively establish a mapping between the information of the control and the information of the corresponding voice interaction element.

With reference to FIG. 5, specifically, the information of the control may be divided into multiple aspects, such as a control ID, a control attribute, and a control supportable event, according to the use of the information. The control ID may specifically include a control code and a control name. The control attribute may include a descriptive text and a control type. The control supportable event may include a supportable operation and an operation parameter. Correspondingly, the information of the voice interaction element may include several aspects, such as an element ID, an element attribute, and an element supportable operation.

Among them, the element ID includes an element code and an element name, wherein the element code corresponds to the control code, and the element name corresponds to the control name. In this way, the element ID corresponds to the control ID of the control in the graphical user interface, thereby forming a mapping between the control in the graphical user interface and the voice interaction element.

The element attribute of the voice interaction element may include an element type, and text description. The element type is used to record the control type (e.g., text, button, single choice, check box, slider, tab, list, etc.) of the control in the graphical user interface corresponding to the voice interaction element. The text description is used to record the expression (e.g., "favorites", "exploring nearby", "vehicle prompt sound", etc.) of the control in the graphical user interface corresponding to the voice interaction element.

The element supportable operation of the element includes operation mode and operation parameter. The operation mode is used to record the operation mode (e.g., clicking, selecting, and assigning, etc.) supported by the control in the graphical user interface corresponding to the voice interaction element. The operation parameter is used to record an operation degree (e.g., long press, short press, etc.) of an operation mode supported by the control in the graphical user interface corresponding to the voice interaction element.

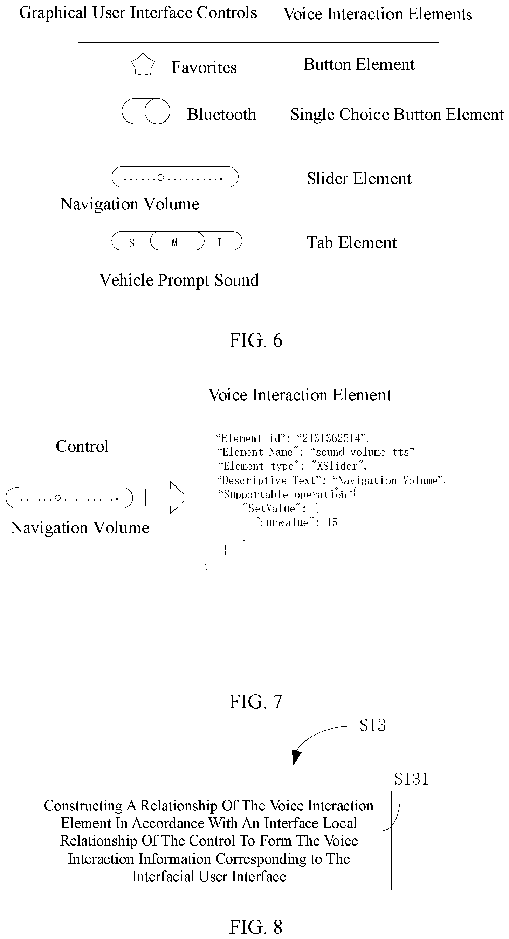

In this way, with reference to FIGS. 6 and 7, a mapping between a control and a voice interaction element corresponding to the control is established according to the information of the control, so as to establish a mapping relationship between the control of the graphical user interface and the voice interaction element. For example, in the graphical user interface of the system menu of the vehicle, the "Bluetooth switch" control is mapped to a single choice element among voice interaction elements, the "navigation volume" control is mapped to a slider element among the voice interaction elements, and the "vehicle prompt sound" control is mapped to a tab element among the voice interaction elements.

As shown in the example of FIG. 7, the "navigation volume" control is mapped to a voice interaction element, of which the element id is 2131362541, the element type is a slider element, the text description is "navigation volume", the supportable operation is "assigning", and the operation parameter is Volume 15.

With reference to FIG. 8, in some embodiments, the graphical user interface includes a plurality of controls, and S13 includes:
S131 of constructing a relationship of voice interaction elements according to an interface local relationship of the controls to form the voice interaction information corresponding to the graphical user interface.

In some embodiments, S131 may be implemented by the construction module 104. In other words, the construction module 104 is configured to construct a relationship of the voice interaction element according to an interface local relationship of the control to form the voice interaction information corresponding to the graphical user interface.

In some embodiments, the processor is configured to construct a relationship of the voice interaction element according to an interface local relationship of the control to form the voice interaction information corresponding to the graphical user interface.

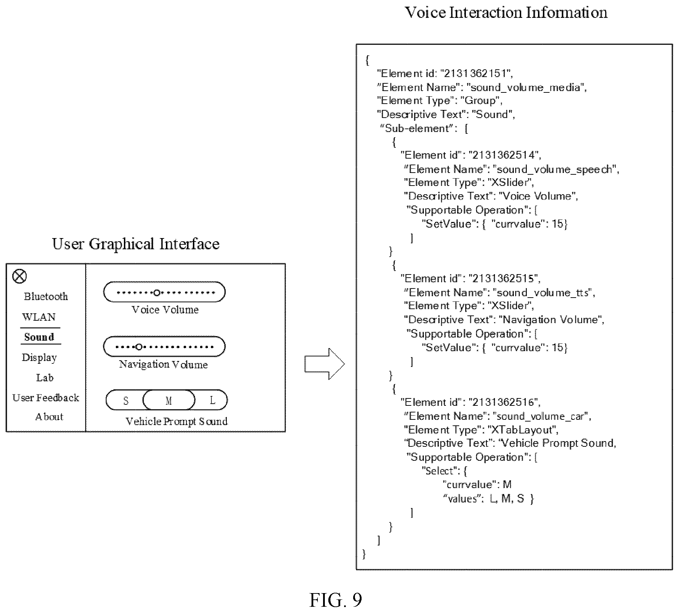

With reference to FIG. 9, specifically, a plurality of controls may be included in a graphical user interface at the same time, and the plurality of controls has a certain local relationship therebetween, such as an inclusion relationship, e.g., a parent control including a plurality of child controls in parallel. The voice interaction elements should also reflect this inclusion relationship, in which case, a parent voice interaction element may be defined, and the parent voice interaction element contains a plurality of child voice interaction elements.

For example, the parent "sound" control in the system menu graphical user interface includes a plurality of child controls, including "voice volume", "navigation volume", and "vehicle prompt sound", etc. When defining a parent "sound" voice interaction element, information of the element includes a plurality of child voice interaction elements, including "voice volume", "navigation volume" and "vehicle prompt sound", etc. Each child voice interaction element includes the information of the voice interaction element as described above. In this way, a plurality of simple voice interaction elements may be combined by a parent-child structure to form a complicate voice interaction element, thereby constructing the voice interaction information corresponding to the graphical user interface.

In some embodiments, the construction method further includes:
S14 of generalizing expressions of the element attribute and the element supportable operation.

In some embodiments, S14 may be implemented by the construction module 104, or in other words, the construction module 104 is configured to generalize expressions of the element attribute and the element supportable operation.

In some embodiments, the processor is configured to generalize expressions of the element attribute and the element supportable operation.

It can be understood that the text description, supportable operation, and operation parameter in the element attribute are generated based on related standards, the interpretability of which is poor. Moreover, either different users' expressions on the same intention or a same user's multiple expressions on the same intention may be different. Therefore, in the initial stage of defining voice interaction elements, manual marking and generalization may be performed on the expressions of the text description mode, the supportable operation, and the operation parameter of the voice interaction element according to some conventional expressions. The generalized voice interaction element may be associated with more expressions, which can better assist in the resolution of voice input information.

For example, the operation instruction that can be supported by the button may be generalized to click, press, etc. For example, the operation instruction that can be supported by the single choice may be generalized to ON, OFF, etc. The text description of "vehicle prompt sound" may be generalized to "prompt sound", "vehicle prompt volume", etc.

In some embodiments, the graphical user interface includes a plurality of controls, the voice interaction element includes a plurality of voice interaction elements, each control corresponds to one voice interaction element, the control attribute includes a layout relationship of the plurality of controls, and the element attribute includes an inclusion relationship of the plurality of voice interaction elements corresponding to the plurality of controls. The construction method includes:
S15 of establishing a directed graph of the plurality of voice interaction elements according to the inclusion relationship.

In some embodiments, S15 may be implemented by the construction module 104. In other words, the construction module 104 is configured to establish a directed graph of the plurality of voice interaction elements according to the inclusion relationship.

In some embodiments, the processor is configured to establish a directed graph of the plurality of voice interaction elements according to the inclusion relationship.

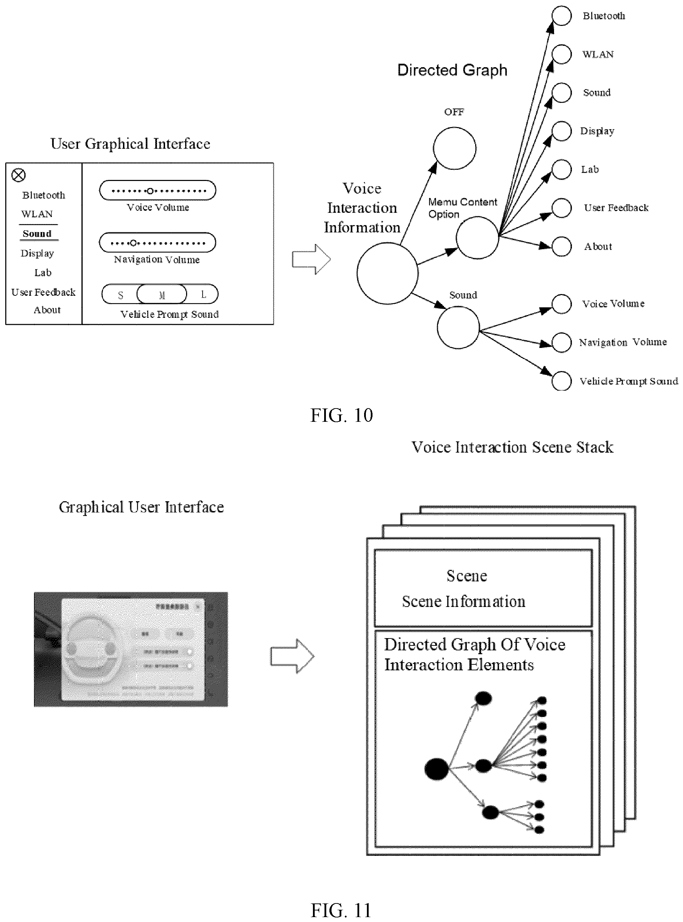

With reference to FIG. 10, specifically, a plurality of controls may be included in a graphical user interface at the same time, and a certain layout relationship is present between the plurality of controls. The directed graph may be used to describe a structural relationship between the elements, and the directed graph of the voice interaction elements may characterize the layout relationship between the plurality of controls in the same graphical user interface. In this embodiment, nodes in the directed graph of the voice interaction elements represent the controls in the graphical user interface, and edges in the directed graph represent the layout relationship of respective controls on the layout. In this way, constructing the graphical user interface as a directed graph of the voice interaction elements can completely keep the layout information of the graphical user interface and the operation information of the controls.

In the actual operation process, when the rendering of the graphical user interface is completed, the system traverses the hierarchical view of the controls and constructs a directed graph of the voice interaction elements corresponding to the current graphical user interface. When the graphical user interface is updated, in other words, after the rendering of a new graphical user interface is completed, the system traverses the hierarchical view of the controls again, obtains the changed control, and then updates a part of the directed graph corresponding to the changed control.

The voice interaction elements to which different controls in the current graphical user interface are mapped cooperatively constitute the voice interaction information describing the graphical user interface.

Specifically, the voice interaction elements are taken as the nodes, and the inclusion relationship of the voice interaction elements is obtained according to the layout relationship of the respective controls in the graphical user interface. The inclusion relationship is taken as an edge to form a directed graph of the voice interaction elements. For example, for the system menu, the upper "OFF" control corresponds to a node, the menu content option corresponds to a node, and the sound option interface being displayed corresponds to a node. Further, the menu content option node includes sub-nodes such as Bluetooth, WLAN, sound, display, lab, user feedback, about, etc. The sound node includes sub-nodes such as voice volume, navigation volume, vehicle prompt sound, etc.

In embodiments of the invention, the construction method includes:
S16 of acquiring a plurality of graphical user interfaces of an application; and
S17 of constructing a voice interaction scene stack corresponding to the graphical user interfaces, according to a stacking relationship of the plurality of graphical user interfaces.

S16 and S17 are adapted to be implemented by the construction module 104. In other words, the construction module 104 is configured to acquire a plurality of graphical user interfaces of an application, and to construct a voice interaction scene stack corresponding to the graphical user interfaces, according to a stacking relationship of the plurality of graphical user interfaces.

The processor is configured to acquire a plurality of graphical user interfaces of an application, and to construct a voice interaction scene stack corresponding to the graphical user interfaces, according to a stacking relationship of the plurality of graphical user interfaces.

With reference to FIG. 11, specifically, in actual operations, when operating some applications, a situation that a plurality of graphical user interfaces may be stacked may occur. For example, a control linked to a certain control displays related content in the form of a floating window. In this case, a plurality of graphical user interfaces may be present in the user's vision, and these graphical user interfaces have a certain logical relationship, such as opening, switching, returning, closing, and other access relationships. Correspondingly, a voice interaction scene stack corresponding to the scene needs to be constructed, and each piece of voice interaction information in the stack corresponds to one graphical user interface. The stacking sequence of the respective pieces of voice interaction information in the voice interaction scene stack is consistent with the stacking sequence of the plurality of graphical user interfaces, thereby effectively supporting voice control of opening, switching, returning, and closing of the plurality of graphical user interfaces.

In embodiments of the invention, the construction method includes:
S18 of acquiring respective applications corresponding to a plurality of graphical user sub-interfaces included in a current graphical user interface;
S19 of acquiring a voice interaction scene stack corresponding to each of the applications; and
S20 of constructing a voice interaction scene stack group corresponding to the current graphical user interface, according to a plurality of voice interaction scene stacks.

S18 and S20 are adapted to be implemented by the construction module 104. In other words, the construction module 104 is configured to acquire respective applications corresponding to a plurality of graphical user sub-interfaces included in a current graphical user interface; acquire a voice interaction scene stack corresponding to each of the applications; and construct a voice interaction scene stack group corresponding to the current graphical user interface, according to a plurality of voice interaction scene stacks.

The processor is configured to acquire respective applications corresponding to a plurality of graphical user sub-interfaces included in a current graphical user interface; acquire a voice interaction scene stack corresponding to each of the applications; and construct a voice interaction scene stack group corresponding to the current graphical user interface, according to a plurality of voice interaction scene stacks.

Specifically, in some scenes of actual operations, graphical user sub-interfaces of a plurality of applications that are running at the same time may be present in the same graphical user interface, and a situation that a plurality of graphical user sub-interfaces is stacked may occur in the running process of each application. For example, in a current graphical user interface of a certain application, a graphical user interface of a system framework and a graphical user interface of a smart assistant application, as well as graphical user interfaces of other applications, such as a navigation application, are present at the same time. In this case, a plurality of graphical user sub-interfaces may be present in the user's vision, and these graphical user sub-interfaces may each include a plurality of stacked graphical user sub-interfaces. Correspondingly, the voice interaction scene stacks respectively corresponding to these applications are constructed as a voice interaction scene stack group corresponding to the scene, and each stack in the group corresponds to one application. The stacking sequence of the respective pieces of voice interaction information in each stack is consistent with the stacking sequence of the plurality of graphical user sub-interfaces of the application, thereby effectively supporting the voice control of opening, switching, returning, closing of the graphical user sub-interfaces of the plurality of applications running at the same time in the same graphical user interface.

In this way, with the above various embodiments, the definition of the voice interaction element, the construction of the voice interaction information, the construction of the voice interaction scene stack, and the construction of the voice interaction scene stack group can be implemented respectively, so as to establish the mapping between the graphical user interface and the voice interactive information for a plurality of different situations that may exist in the graphical user interface, with a high degree of consistency between the graphical user interface and the voice interaction information, thereby providing the possibility of voice interaction of the graphical user interface.

An embodiment of the present disclosure further provides a computer-readable storage medium. One or more non-volatile computer-readable storage media contain computer-executable instructions, which when executed by one or more processors, cause the one or more processors to perform the construction method of the voice interaction information according to any of the above embodiments.

A person of ordinary skill in the art can understand that all or part of the processes in the methods of the above embodiments may be implemented by instructing relevant hardware via computer program. The program may be stored in a non-volatile computer-readable storage medium. When executed, the program may include the processes of the methods in the above embodiments. The storage medium may be a magnetic disk, an optical disc, a read-only memory (ROM), etc.

The above embodiments only show several implementations of the present disclosure, and the description thereof is relatively specific and detailed, but it should not be understood as any limitation to the patent scope of the present disclosure. It should be noted that for those of ordinary skill in the art, several modifications and improvements can be made. Therefore, the protection scope of the present disclosure shall be subject to the appended claims.

## Claims

1. A construction method of voice interaction information, wherein the voice interaction information is used to describe a corresponding graphical user interface comprising a plurality of controls, the construction method comprising:
defining a plurality of voice interaction elements in accordance with information of the plurality of controls, each of the plurality of voice interaction elements corresponding to one of the plurality of controls, information constituting the plurality of voice interaction elements corresponding to the information of the plurality of controls in one to one correspondence, wherein the information of the plurality of controls comprises a control ID, a control attribute, and a control supportable event, the control attribute comprising a layout relationship of the plurality of controls; and wherein the information of the plurality of voice interaction elements comprises an element ID, an element attribute, and an element supportable operation, the element attribute comprising an inclusion relationship of the corresponding plurality of voice interaction elements;
establishing a mapping relationship between the plurality of voice interaction elements and the plurality of controls, wherein said establishing the mapping relationship between the plurality of voice interaction elements and the plurality of controls comprises: establishing a mapping between the information of each of the plurality of controls and the information of the corresponding voice interaction element; and
constructing the voice interaction information corresponding to the graphical user interface in accordance with the mapping relationship,
wherein the construction method further comprises:
establishing a directed graph of the plurality of voice interaction elements in accordance with the inclusion relationship, wherein the directed graph of the plurality of voice interaction elements is configured to characterize the layout relationship of the plurality of controls in a same graphical user interface,
wherein said constructing the voice interaction information corresponding to the graphical user interface in accordance with the mapping relationship comprises:
constructing a relationship of the plurality of voice interaction elements in accordance with an interface local relationship of the plurality of controls, to form the voice interaction information corresponding to the graphical user interface,
wherein the construction method further comprises:
acquiring a plurality of graphical user interfaces of an application; and
constructing a voice interaction scene stack corresponding to the plurality of graphical user interfaces, in accordance with a stacking relationship of the plurality of graphical user interfaces,
wherein the construction method further comprises:
acquiring respective applications corresponding to a plurality of graphical user sub-interfaces included in a current graphical user interface;
acquiring the voice interaction scene stack corresponding to each of the applications; and
constructing a voice interaction scene stack group corresponding to the current graphical user interface, in accordance with a plurality of voice interaction scene stacks.

2. The construction method according to claim 1, further comprising:
generalizing expressions of the element attribute and the element supportable operation.

3. A vehicle (100), comprising:
a processing module (102) configured to define a plurality of voice interaction elements in accordance with information of a plurality of controls comprised by a graphical user interface, each of the plurality of voice interaction elements corresponding to one of the plurality of controls, information constituting the plurality of voice interaction elements corresponding to the information of the plurality of controls in one to one correspondence, wherein the information of the plurality of controls comprises a control ID, a control attribute, and a control supportable event, the control attribute comprising a layout relationship of the plurality of controls; and wherein the information of the plurality of voice interaction elements comprises an element ID, an element attribute, and an element supportable operation, the element attribute comprising an inclusion relationship of the corresponding plurality of voice interaction elements; and
a construction module (104) configured to establish a mapping relationship between the plurality of voice interaction elements and the plurality of controls, wherein said establishing the mapping relationship between the plurality of voice interaction elements and the plurality of controls comprises: establishing a mapping between the information of each of the plurality of controls and the information of the corresponding voice interaction element,
wherein the construction module is further configured to construct voice interaction information corresponding to the graphical user interface in accordance with the mapping relationship, and
wherein the construction module is further configured to establish a directed graph of the plurality of voice interaction elements in accordance with the inclusion relationship, the directed graph of the plurality of voice interaction elements being configured to characterize the layout relationship of the plurality of controls in a same graphical user interface,
wherein said constructing the voice interaction information corresponding to the graphical user interface in accordance with the mapping relationship comprises:
constructing a relationship of the plurality of voice interaction elements in accordance with an interface local relationship of the plurality of controls, to form the voice interaction information corresponding to the graphical user interface,
wherein the construction module is further configured to:
acquire a plurality of graphical user interfaces of an application; and
construct a voice interaction scene stack corresponding to the plurality of graphical user interfaces, in accordance with a stacking relationship of the plurality of graphical user interfaces,
wherein the construction module is further configured to:
acquire respective applications corresponding to a plurality of graphical user sub-interfaces included in a current graphical user interface;
acquire the voice interaction scene stack corresponding to each of the applications; and
construct a voice interaction scene stack group corresponding to the current graphical user interface, in accordance with a plurality of voice interaction scene stacks.

4. The vehicle according to claim 3, wherein the construction module is further configured to:
generalize expressions of the element attribute and the element supportable operation.

5. A non-volatile computer-readable storage medium of computer-executable instructions, the computer-executable instructions, when executed by one or more processors, causing the one or more processors to perform the construction method of voice interaction information according to any of claims 1 to 2.

## Patentansprüche

1. Konstruktionsverfahren von Sprachinteraktionsinformationen,
wobei die Sprachinteraktionsinformationen verwendet werden, um eine entsprechende grafische Benutzeroberfläche zu beschreiben, die eine Vielzahl von Steuerelementen umfasst, das Konstruktionsverfahren umfassend:
Definieren einer Vielzahl von Sprachinteraktionselementen gemäß den Informationen der Vielzahl von Steuerelementen, wobei die Vielzahl von Sprachinteraktionselemente eins zu eins der Vielzahl von Steuerelementen entspricht, so dass die die Vielzahl von Sprachinteraktionselementen bildende Informationen und die Informationen der Vielzahl von Steuerelementen in einer Eins-zu-Eins-Korrespondenz stehen, wobei die Informationen der Vielzahl von Steuerelementen eine Steuer-ID, ein Steuerattribut und ein von den Steuerelementen unterstützbares Ereignis umfassen, wobei das Steuerattribut eine Layoutbeziehung der Vielzahl von Steuerelementen umfasst; und wobei die Informationen der Vielzahl von Sprachinteraktionselementen eine Element-ID, ein Elementattribut und eine durch ein Element unterstützbare Operation umfassen, wobei das Elementattribut eine Einschlussbeziehung der entsprechenden Vielzahl von Sprachinteraktionselementen umfasst;
Erstellen einer Abbildungsbeziehung zwischen der Vielzahl von Sprachinteraktionselementen und der Vielzahl von Steuerelementen, wobei das Erstellen einer Abbildungsbeziehung zwischen der Vielzahl von Sprachinteraktionselementen und der Vielzahl von Steuerelementen Erstellen einer Abbildung zwischen den Informationen jedes der Vielzahl von Steuerelementen und den Informationen des entsprechenden Sprachinteraktionselements umfasst; und
Konstruieren der der grafischen Benutzeroberfläche entsprechenden Sprachinteraktionsinformationen gemäß der Abbildungsbeziehung,
wobei das Konstruktionsverfahren weiterhin umfasst:
Erstellen eines gerichteten Graphs der Vielzahl von Sprachinteraktionselementen gemäß der Einschlussbeziehung, wobei das gerichtete Graph der Vielzahl von Sprachinteraktionselementen so ausgebildet ist, die Layoutbeziehung der Vielzahl von Steuerelementen in derselben grafischen Benutzeroberfläche zu charakterisieren,
wobei das Konstruieren der der grafischen Benutzeroberfläche entsprechenden Sprachinteraktionsinformationen gemäß der Abbildungsbeziehung umfasst:
Konstruieren einer Beziehung der Vielzahl von Sprachinteraktionselementen gemäß einer lokalen Oberflächebeziehung der Vielzahl von Steuerelementen, um die der grafischen Benutzeroberfläche entsprechenden Sprachinteraktionsinformationen zu bilden,
wobei das Konstruktionsverfahren weiter umfasst:
Erfassen einer Vielzahl von grafischen Benutzeroberflächen einer Anwendung;
Erstellen eines der Vielzahl von grafischen Benutzeroberflächen entsprichenden Sprachinteraktionsszenenstapels gemäß einer Stapelbeziehung der Vielzahl von grafischen Benutzeroberflächen,
wobei das Konstruktionsverfahren weiter umfasst:
Erfassen entsprechender Anwendungen, die jeweils einer Vielzahl von grafischen Benutzer-Unterschnittstellen entsprechen, die in einer aktuellen grafischen Benutzeroberfläche enthalten sind;
Erfassen des Sprachinteraktionsszenenstapels, das jeder der Anwendungen entspricht;
Erstellen einer den aktuellen grafischen Benutzeroberfläche entsprichenden Sprachinteraktionsszenenstapelgruppe gemäß einer Vielzahl von Sprachinteraktionsszenenstapeln.

2. Konstruktionsverfahren nach Anspruch 1,
**dadurch gekennzeichnet, dass** das Konstruktionsverfahren weiter umfasst:
Verallgemeinern der Ausdrücke des Elementattributs und der Element unterstützbaren Operation.

3. Fahrzeug umfassend:
ein Verarbeitungsmodul, das ausgebildet ist, eine Vielzahl von Sprachinteraktionselementen gemäß den Informationen der Vielzahl von Steuerelementen zu definieren, wobei die Vielzahl von Sprachinteraktionselemente eins zu eins der Vielzahl von Steuerelementen entspricht, so dass die die Vielzahl von Sprachinteraktionselementen bildende Informationen und die Informationen der Vielzahl von Steuerelementen in einer Eins-zu-Eins-Korrespondenz stehen, wobei die Informationen der Vielzahl von Steuerelementen eine Steuer-ID, ein Steuerattribut und ein von den Steuerelementen unterstützbares Ereignis umfassen, wobei das Steuerattribut eine Layoutbeziehung der Vielzahl von Steuerelementen umfasst; und wobei die Informationen der Vielzahl von Sprachinteraktionselementen eine Element-ID, ein Elementattribut und eine durch ein Element unterstützbare Operation umfassen, wobei das Elementattribut eine Einschlussbeziehung der entsprechenden Vielzahl von Sprachinteraktionselementen umfasst;
ein Konstruktionsmodul, das ausgebildet ist, eine Abbildungsbeziehung zwischen der Vielzahl von Sprachinteraktionselementen und der Vielzahl von Steuerelementen zu erstellen, wobei das Erstellen einer Abbildungsbeziehung zwischen der Vielzahl von Sprachinteraktionselementen und der Vielzahl von Steuerelementen Erstellen einer Abbildung zwischen den Informationen jedes der Vielzahl von Steuerelementen und den Informationen des entsprechenden Sprachinteraktionselements umfasst;
wobei das Konstruktionsmodul weiter ausgebildet ist, die der grafischen Benutzeroberfläche entsprechenden Sprachinteraktionsinformationen gemäß der Abbildungsbeziehung zu konstruieren,
wobei das Konstruktionsmodul weiter ausgebildet ist, ein gerichtetes Graph der Vielzahl von Sprachinteraktionselementen gemäß der Einschlussbeziehung zu erstellen, wobei das gerichtete Graph der Vielzahl von Sprachinteraktionselementen so ausgebildet ist, die Layoutbeziehung der Vielzahl von Steuerelementen in derselben grafischen Benutzeroberfläche zu charakterisieren,
wobei das Konstruieren der der grafischen Benutzeroberfläche entsprechenden Sprachinteraktionsinformationen gemäß der Abbildungsbeziehung umfasst:
Konstruieren einer Beziehung der Vielzahl von Sprachinteraktionselementen gemäß einer lokalen Oberflächebeziehung der Vielzahl von Steuerelementen, um die der grafischen Benutzeroberfläche entsprechenden Sprachinteraktionsinformationen zu bilden,
wobei das Konstruktionsmodul weiter ausgebildet ist, eine Vielzahl von grafischen Benutzeroberflächen einer Anwendung zu erfassen, und einen der Vielzahl von grafischen Benutzeroberflächen entsprichenden Sprachinteraktionsszenenstapel gemäß einer Stapelbeziehung der Vielzahl von grafischen Benutzeroberflächen zu erstellen,
wobei das Konstruktionsmodul weiter ausgebildet ist,
entsprechende Anwendungen, die jeweils einer Vielzahl von grafischen Benutzer-Unterschnittstellen entsprechen, die in einer aktuellen grafischen Benutzeroberfläche enthalten sind, zu erfassen;
den Sprachinteraktionsszenenstapel, das jeder der Anwendungen entspricht, zu erfassen;
eine den aktuellen grafischen Benutzeroberfläche entsprichende Sprachinteraktionsszenenstapelgruppe gemäß einer Vielzahl von Sprachinteraktionsszenenstapeln zu erstellen.

4. Fahrzeug nach Anspruch 3, **dadurch gekennzeichnet, dass** das Konstruktionsmodul weiter ausgebildet ist:
die Ausdrücke des Elementattributs und der Element unterstützbaren Operation zu verallgemeinern.

5. Nichtflüchtiges computerlesbares Speichermedium für computerausführbare Anweisungen,
**dadurch gekennzeichnet, dass**
die computerausführbaren Anweisungen, wenn sie von einem oder mehreren Prozessoren ausgeführt werden, den einen oder die mehreren Prozessoren dazu veranlassen, das Konstruktionsverfahren für Sprachinteraktionsinformationen gemäß einem der Ansprüche 1 bis 2 auszuführen.

## Revendications

1. Une méthode de construction d'informations d'interaction vocale, dans laquelle les informations d'interaction vocale sont utilisées pour décrire une interface utilisateur graphique correspondante comprenant une pluralité de contrôles, la méthode de construction comprenant :
définir une pluralité d'éléments d'interaction vocale conformément aux informations de la pluralité de contrôles, chacun des éléments de la pluralité d'interaction vocale correspondant à l'un des contrôles de la pluralité, les informations constituant la pluralité d'éléments d'interaction vocale correspondant aux informations de la pluralité de contrôles dans une correspondance un à un, les informations de la pluralité de contrôles comprenant un identifiant de contrôle, un attribut de contrôle et un événement supportable par le contrôle, l'attribut de contrôle comprenant une relation de disposition de la pluralité de contrôles ; et dans lequel les informations de la pluralité d'éléments d'interaction vocale comprennent un identifiant d'élément, un attribut d'élément et une opération supportable par l'élément, l'attribut d'élément comprenant une relation d'inclusion des éléments de la pluralité d'interaction vocale correspondants ;
établir une relation de mappage entre la pluralité d'éléments d'interaction vocale et la pluralité de contrôles, ledit établissement de la relation de mappage entre la pluralité d'éléments d'interaction vocale et la pluralité de contrôles comprenant : établir un mappage entre les informations de chacun des contrôles de la pluralité et les informations de l'élément d'interaction vocale correspondant ; et
construire les informations d'interaction vocale correspondant à l'interface utilisateur graphique conformément à la relation de mappage,
dans lequel la méthode de construction comprend en outre :
établir un graphe orienté de la pluralité d'éléments d'interaction vocale conformément à la relation d'inclusion, dans lequel le graphe orienté de la pluralité d'éléments d'interaction vocale est configuré pour caractériser la relation de disposition de la pluralité de contrôles dans une même interface utilisateur graphique,
dans lequel la construction des informations d'interaction vocale correspondant à l'interface utilisateur graphique conformément à la relation de mappage comprend :
construire une relation de la pluralité d'éléments d'interaction vocale conformément à une relation locale d'interface de la pluralité de contrôles, pour former les informations d'interaction vocale correspondant à l'interface utilisateur graphique,
dans lequel la méthode de construction comprend en outre :
acquérir une pluralité d'interfaces utilisateur graphiques d'une application ; et
construire une pile de scènes d'interaction vocale correspondant à la pluralité d'interfaces utilisateur graphiques, conformément à une relation de superposition des interfaces utilisateur graphiques,
dans lequel la méthode de construction comprend en outre :
acquérir les applications respectives correspondant à une pluralité de sous-interfaces utilisateur graphiques incluses dans une interface utilisateur graphique actuelle ;
acquérir la pile de scènes d'interaction vocale correspondant à chacune des applications; et construire un groupe de piles de scènes d'interaction vocale correspondant à l'interface utilisateur graphique actuelle, conformément à une pluralité de piles de scènes d'interaction vocale.

2. La méthode de construction selon l'article 1, comprenant en outre :
généraliser les expressions de l'attribut de l'élément et de l'opération supportable par l'élément.

3. A 2 [voiture (100),] 2 comprenant :
un module de traitement2 [(102)] 2
configuré pour définir une pluralité d'éléments d'interaction vocale conformément aux informations d'une pluralité de contrôles comprises par une interface utilisateur graphique, chacun des éléments d'interaction vocale de la pluralité correspondant à l'un des contrôles de la pluralité, les informations constituant la pluralité d'éléments d'interaction vocale correspondant aux informations de la pluralité de contrôles dans une correspondance un à un, les informations de la pluralité de contrôles comprenant un ID de contrôle, un attribut de contrôle, et un événement supportable par le contrôle, l'attribut de contrôle comprenant une relation de disposition de la pluralité de contrôles ; et dans lequel les informations de la pluralité d'éléments d'interaction vocale comprennent un ID d'élément, un attribut d'élément, et une opération supportable par l'élément, l'attribut de l'élément comprenant une relation d'inclusion des éléments d'interaction vocale correspondants ; et
un module de construction 2 [(104)] 2
configuré pour établir une relation de mappage entre la pluralité d'éléments d'interaction vocale et la pluralité de contrôles, ledit établissement de la relation de mappage entre la pluralité d'éléments d'interaction vocale et la pluralité de contrôles comprenant : établir un mappage entre les informations de chacun des contrôles de la pluralité et les informations de l'élément d'interaction vocale correspondant,
dans lequel le module de construction est en outre configuré pour construire des informations d'interaction vocale correspondant à l'interface utilisateur graphique conformément à la relation de mappage, et
dans lequel le module de construction est en outre configuré pour établir un graphe dirigé de la pluralité d'éléments d'interaction vocale conformément à la relation d'inclusion, le graphe dirigé de la pluralité d'éléments d'interaction vocale étant configuré pour caractériser la relation de disposition de la pluralité de contrôles dans une même interface utilisateur graphique,
dans lequel la construction des informations d'interaction vocale correspondant à l'interface utilisateur graphique conformément à la relation de mappage comprend :
construire une relation de la pluralité d'éléments d'interaction vocale conformément à une relation locale d'interface de la pluralité de contrôles, pour former les informations d'interaction vocale correspondant à l'interface utilisateur graphique,
dans lequel le module de construction est en outre configuré pour :
acquérir une pluralité d'interfaces utilisateur graphiques d'une application ; et
construire une pile de scènes d'interaction vocale correspondant à la pluralité d'interfaces utilisateur graphiques, conformément à une relation de superposition des interfaces utilisateur graphiques,
dans lequel le module de construction est en outre configuré pour :
acquérir les applications respectives correspondant à une pluralité de sous-interfaces utilisateur graphiques incluses dans une interface utilisateur graphique actuelle ;
acquérir la pile de scènes d'interaction vocale correspondant à chacune des applications ; et
construire un groupe de piles de scènes d'interaction vocale correspondant à l'interface utilisateur graphique actuelle, conformément à une pluralité de piles de scènes d'interaction vocale.

4. Le véhicule selon la revendication 3, dans lequel le module de construction est en outre configuré pour :
généraliser les expressions de l'attribut de l'élément et de l'opération supportable par l'élément.

5. Un support de stockage informatique non volatile d'instructions exécutables par ordinateur, les instructions exécutables par ordinateur, lorsqu'elles sont exécutées par un ou plusieurs processeurs, amenant le ou les processeurs à effectuer le procédé de construction des informations d'interaction vocale selon l'une quelconque des revendications 1 à 2.
